# FASCICULE DE BREVET EUROPEEN

(11) **EP 3 390 585 B1**
(45) Date de publication et mention de la délivrance du brevet: **16.03.2022**
(21) Numéro de dépôt: 16826110.5
(22) Date de dépôt: 16.12.2016
(51) Int. Cl.: C10J 3/02, C10J 3/46

(54) **PROCÉDÉ DE GAZÉIFICATION À LIT FLUIDISÉ DE PNEUS**
VERFAHREN ZUR WIRBELBETTVERGASUNG VON REIFEN
PROCESS FOR THE FLUIDIZED-BED GASIFICATION OF TYRES

(30) Priorité: 16.12.2015 FR 1562543
(43) Date de publication de la demande: 24.10.2018
(73) Titulaire: Compagnie Générale des Etablissements Michelin, 63000 Clermont-Ferrand (FR); Commissariat à l'Énergie Atomique et aux Énergies Alternatives, 75015 Paris (FR)
(72) Inventeur: SETIER, Pierre-Alexandre, 38300 Bourgoin-Jallieu (FR); CAVAGNOL, Sofien, 69009 Lyon (FR)
(74) Mandataire: Regimbeau
(86) Numéro de dépôt international: PCT/FR2016/053512
(87) Numéro de publication internationale: WO 2017/103527

(56) Documents cités:
- EP-A1- 2 674 472
- WO-A1-81/01713
- WO-A2-2004/096456
- CN-A- 104 629 806
- US-A1- 2014 305 786
- D.J. Harris: "Fixed bed gasifiers", , 17 December 2019 (2019-12-17), pages 1-9, XP055653401, Retrieved from the Internet: URL:https://www.sciencedirect.com/topics/e ngineering/fixed-bed-gasifiers [retrieved on 2019-12-17]

## Description

La présente invention concerne un procédé de fabrication d'un gaz de synthèse par gazéification de pneus ou morceaux de pneus.

La gazéification est une technique bien connue et elle est largement utilisée pour brûler les combustibles fossiles solides et liquides lourds, y compris les fonds de raffinage. La gazéification est une réaction endothermique entre la matière carbonée et l'agent gazéifiant:

C + H₂O → CO + H₂ (1)

C + CO₂ → 2 CO (2)

La gazéification permet de convertir des matériaux carbonés, tels que le charbon, le pétrole, les biocarburants, la biomasse, en présence d'agent gazéifiant et à des températures élevées, généralement supérieures à 800 °C, en gaz de synthèse encore appelé syngas. Ce gaz de synthèse peut ensuite entrer dans la transformation ou fabrication d'autres composés.

Le gaz de synthèse généré comprend majoritairement des gaz CO, CO₂, H₂. Il peut également contenir des composés minoritaires (NH₃, HCl, HF, HCN, H₂S, COS, métaux alcalins...), par exemple à l'état de vapeur. Enfin, pour des gazéifications à basse température (<1200°C), on obtient une part plus ou moins importante de composés hydrocarbonés sous forme gazeuse (goudrons, CH₄), résultant d'un craquage incomplet des gaz de pyrolyse.

Les gaz de synthèse peuvent être brûlés directement dans les moteurs à combustion interne, ou ils peuvent être séparés ou utilisés pour produire différents produits comme des carburants de synthèse notamment via le procédé Fischer-Tropsch.

La gazéification utilise souvent une oxydation partielle de l'entrant pour apporter la chaleur nécessaire à la conversion du carbone contenu dans une charge d'alimentation en gaz de synthèse comprenant du monoxyde de carbone (CO) et d'hydrogène (H₂).

Les pneus usagés et les déchets de pneus peuvent être une charge d'alimentation. Ainsi la gazéification permet de valoriser ces déchets. En outre, les pneus usagés non recyclés constituent une préoccupation environnementale, car ils sont généralement éliminés dans des décharges, s'accumulent en tas dans des zones d'entreposage de pneus ou sont incinérés. Le recyclage des pneus usagés en matières d'intérêt pour l'industrie du pneumatique présente des difficultés car le pneu est un composite. De plus les compositions de pneus diffèrent suivant les différentes parties du pneu (gomme intérieure, nappes, flanc, bande de roulement ...) mais aussi suivant l'usage du produit (marché du poids lourds, véhicule de tourisme, engins de génie civil, engins agricoles, aviation, moto ou vélo).

Il existe différents types de réacteurs pour gazéifier un résidu carboné, notamment des lits fixes, des lits fluidisés ou encore des réacteurs à flux entrainés. Ces réacteurs fonctionnent en mode continu.

Des procédés de traitement des déchets carbonés (dont des pneus) par gazéification dans des réacteurs à lit fluidisé ont déjà été décrits. Par exemple la demande EP 776 962 décrit un procédé de gazéification en 2 étapes utilisant une combinaison de 2 types de réacteurs:
- une première étape de gazéification dans un lit fluidisé à 450-800°C ;
- une deuxième étape de gazéification dans un réacteur à haute température à 1300°C ou plus.

Un procédé en deux étapes (gazéification pour obtenir un gaz contenant des goudrons à environ 800°C puis 2ème gazéification de ce gaz à environ 1200°C pour produire du gaz de synthèse) est également décrit dans WO 2011/129878.

Les méthodes de gazéification connues ont pour inconvénient de nécessiter beaucoup d'énergie de chauffage, notamment à cause du faible rendement, et des temps de chauffage longs, incompatibles avec les exigences des industriels.

Il est également connu des méthodes de gazéification utilisant la technique en lit fluidisé, où avantageusement la température à l'intérieur du réacteur peut être régulée pour ne pas atteindre le point de ramollissement des cendres, et ainsi limiter ou éviter l'agglomération du lit. En effet, pour les industriels, il est avantageux de pouvoir travailler à des températures allant de 850°C à 1000°C. Cette régulation est notamment possible en jouant sur le taux d'injection de vapeur d'eau et/ou d'agent gazéifiant en entrée.

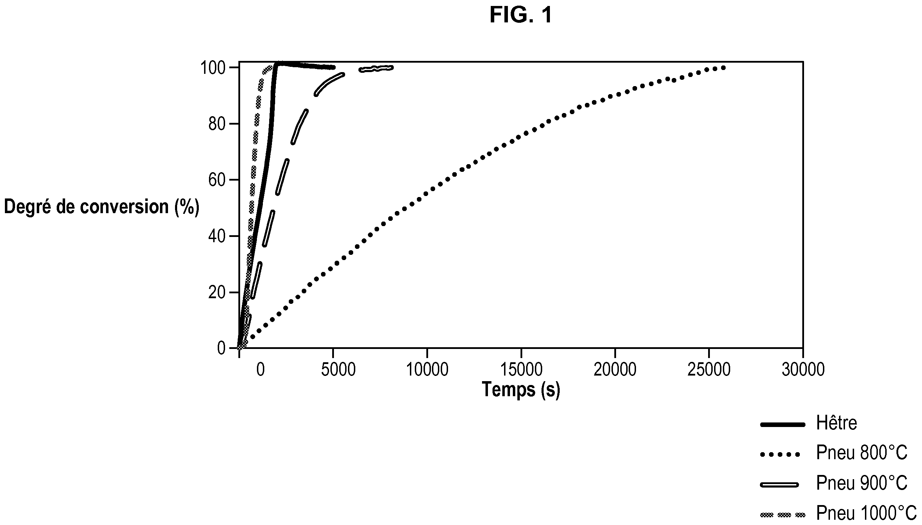

Or, à ces températures de fonctionnement, la vitesse de réaction des pneus est très lente, comparée aux biomasses pour lesquelles ces technologies en lit fluidisé ont été développées. En effet des essais de gazéification ont été réalisés dans un lit fluidisé pilote. Or, la conversion du carbone contenu dans des pneus en gaz de synthèse reste inférieure à 50%, et la fraction de carbone restant dans le résidu carboné est élevée (cf. figure 1). Ces résultats montrent que même à 950°C, la gazéification, en particulier la gazéification sous vapeur d'eau, des pneus usagés n'est pas suffisamment poussée pour que le fonctionnement industriel d'un lit fluidisé soit équilibré et que la rentabilité économique soit atteinte.

WO 81/01713 A1 et CN 104 629 806 A divulguent des procédés pour gazéifier des pneus sans l'utilisation explicite d'un catalyseur.

Il est devenu nécessaire de trouver un moyen de simplifier les méthodes de gazéification des pneus et notamment de proposer des méthodes adaptées aux contraintes industrielles. L'invention a pour but de remédier à ces inconvénients en fournissant un procédé de gazéification des pneus usagés qui soit fiable et économe en énergie, et par conséquent avec une cinétique suffisante pour une utilisation à grande échelle.

La présente invention permet de fournir un nouveau procédé de fabrication de gaz de synthèse qui a une ou plusieurs des caractéristiques suivantes :
- le procédé est simple à mettre en place ;
- le procédé peut être installé sur une ligne de production en continu dans une usine de production;
- le procédé permet de traiter une grande quantité de pneus de manière très rapide, par exemple en moins de 15 minutes ;
- le procédé utilise de faible quantités de catalyseur ;
- le procédé n'utilise pas de métaux, notamment du nickel ;
- le procédé utilise une seule étape de gazéification ;
- le procédé permet de bénéficier des avantages de lits fluidisés ou des lits fixes.

L'invention a pour objet un procédé de fabrication d'un gaz de synthèse comprenant les étapes suivantes :
a) charger un réacteur à lit fluidisé ou à lit fixe avec une source de potassium et des pneus ou des morceaux de pneus, la quantité de potassium apportée par la source de potassium variant de 0.5 à 100 % en masse par rapport à la masse de pneus ou de morceaux de pneus
b) injecter dans le réacteur de l'étape a), un gaz de gazéification à une vitesse allant de 0.1 m.s⁻¹ à 5 m.s⁻¹, la température au sein dudit réacteur étant comprise de 800 à 1200°C, l'étape b) étant réalisée en présence de vapeur d'eau ;
c) récupérer le gaz de synthèse.

Le procédé selon l'invention est réalisé de préférence en continu. Plus particulièrement, le chargement du réacteur à l'étape a) du procédé est réalisé en continu.

De préférence, l'étape a) du procédé selon l'invention est réalisée à chaud, c'est-à-dire que le réacteur est chaud, plus particulièrement le réacteur est chaud lors du chargement des pneus ou des morceaux de pneus.

L'étape a) du procédé selon l'invention comprend le chargement de pneus ou de morceaux de pneus. Les pneus peuvent provenir de pneu usagés ou de pneus neufs mais refusés au contrôle qualité lors de leur fabrication.

Les morceaux de pneus peuvent provenir de différentes ressources de pneumatiques issues de traitement mécanique : les déchiquetas issus des premières étapes de déchiquetage qui représentent des tailles d'objet centimétriques, les broyats de taille millimétrique et les broyats de taille <1mm appelés aussi poudrettes. Ces différents entrants se distinguent par leur taille, la nature des polluants susceptibles d'être présents (typiquement le métal dans les premières étapes de déchiquetage).

De préférence, le chargement du réacteur à l'étape a) du procédé est réalisé avec des pneus ou des morceaux de pneus à température ambiante, plus particulièrement avec des pneus ou des morceaux de pneus n'ayant subi aucun traitement thermique.

Le procédé selon l'invention est réalisé de préférence en utilisant un réacteur à lit fluidisé. En lit fluidisé, les particules du lit et la vitesse du courant gazeux oxydant sont choisis de telle façon que les particules soient maintenues en suspension dans le courant gazeux. On obtient ainsi un mouvement rapide et désordonné des grains ayant pour effet d'homogénéiser en continu la masse solide, ce qui entraine de bons échanges de chaleur et de matière dans le réacteur.

Avantageusement, le lit fluidisé mis en œuvre selon le procédé de l'invention est un lit fluidisé bouillonnant, un lit fluidisé circulant, un lit fluidisé dense ou un lit fluidisé entraîné.

Selon une variante, le lit fluidisé mis en œuvre selon le procédé de l'invention est un lit fluidisé bouillonnant. Dans ce cas de figure, il est préférable que le débit du gaz de gazéification reste en dessous de la vitesse d'entrainement des particules pour ne pas voir ces dernières être emportées. Pendant la gazéification, il est possible qu'une partie des cendres et des particules fines de charbon soient néanmoins entrainées et doivent être collectées par exemple dans un cyclone. La vitesse du gaz de gazéification est de préférence assez faible, de l'ordre de 0.5 à 2 m/s, et permet de mettre en suspension les particules du matériau de lit (sable par exemple) et ainsi devenir un lit fluidisé. Ceci assure un brassage qui assure un bon transfert thermique et massique.

Plus préférentiellement, le lit fluidisé mis en œuvre selon le procédé de l'invention est un lit fluidisé circulant. Ce type de réacteurs fonctionne sur le même principe que le lit fluidisé bouillonnant mais la vitesse du gaz de gazéification est de préférence de l'ordre de 2 à 5 m/s. Ainsi cela peut compenser le poids des particules de combustible, mais aussi provoquer l'expansion du lit, et entraîner les particules le long du réacteur. Une masse continuellement en mouvement est obtenue à l'intérieur de celui-ci. A l'extérieur du réacteur, les particules vont être séparées du gaz de synthèse par un cyclone. Les particules sont ensuite soit réinjectées en partie basse du réacteur pour finir d'être converties en gaz de synthèse (lit fluidisé circulant simple), soit soutirées pour venir alimenter un second réacteur de combustion, produisant la chaleur nécessaire aux réactions endothermiques de gazéification (lit fluidisé circulant double).

Dans le cas du lit fluidisé circulant double, les réactions de gazéification et de combustion sont séparées. La vitesse du gaz de gazéification est de préférence de l'ordre de 0,1 à 0,5 m/s. Ainsi cela permet de fluidiser au minimum et pouvoir emmener le lit vers la partie où la combustion a lieu. Avec cette configuration, le gaz de synthèse n'est avantageusement pas dilué avec le gaz de combustion et contient donc très peu d'azote et de CO₂.

Selon une variante du procédé selon l'invention le lit fluidisé mis en œuvre selon le procédé de l'invention est une combinaison d'un lit fluidisé bouillonnant et d'un lit fluidisé circulant. Selon une variante du procédé selon l'invention, l'étape a) est réalisée en utilisant un réacteur à lit fixe. Il peut s'agir d'un lit fixe à co-courant ou d'un lit fixe à contre-courant.

Dans un lit fixe à co-courant, les pneus ou morceaux de pneus sont introduits de préférence en haut du réacteur et le soutirage du gaz de synthèse se fait en partie basse. Il existe également des lits fixe à co-courant avec injection de biomasse en bas du réacteur et soutirage du gaz de synthèse en haut du réacteur. L'agent oxydant suit le même sens que la ressource carbonée, et les deux zones d'oxydation et de réduction se trouvent inversées par rapport à la configuration contre-courant décrite ci-après. L'oxydation a lieu au contact de la source d'oxygène; la réduction se fait en partie basse du réacteur.

Dans un gazogène à lit fixe à contre-courant, le combustible est de préférence introduit en partie supérieure du réacteur, l'agent oxydant étant lui introduit par le bas sous forme de courant ascendant. Le combustible descend à une vitesse de l'ordre de quelques cm/min alors que le gaz se déplace à environ 1m/s. Le temps de séjour du combustible se trouve ainsi être de l'ordre de l'heure, pour un temps de séjour du gaz de quelques secondes seulement. Le gaz de synthèse produit est soutiré en partie haute du réacteur.

Avantageusement un réacteur à lit fixe peut recevoir des pneus comme charge d'alimentation, c'est-à-dire des pneus entiers en l'état.

Avantageusement un réacteur à lit fixe peut recevoir des pneus n'ayant subi aucun traitement chimique ou mécanique.

De préférence, les morceaux de pneus sont introduits dans le réacteur à lit fluidisé et les pneus sont introduits dans le réacteur à lit fixe.

Avantageusement, les pneus ou morceaux de pneus sont introduits dans le réacteur comme seule matière premières carbonées. Il peut être envisagé de prétraité les morceaux de pneus par un traitement chimique ou mécanique.

De préférence, les morceaux de pneus mis en œuvre selon le procédé de l'invention ne sont pas brulés ou carbonisés. De préférence, les morceaux de pneus ne se présentent pas sous forme de charbon de pneus.

Les composants métalliques et/ou textiles des pneus sont avantageusement préalablement retirés pour être valorisés directement. Le métal peut être éliminé lors des étapes de broyage par extraction mécanique et/ou l'utilisation de champs magnétiques. Après l'élimination des composants métalliques et/ou textiles, le corps de pneu restant peut être traité pour le réduire à une forme convenant au procédé selon l'invention.

Les morceaux de pneus sont avantageusement choisis parmi :
- des broyats centimétriques de pneus, ayant avantageusement une taille allant de 4 mm à 20 mm ;
- des granulats de pneus, ayant avantageusement une taille allant de 0,8 mm à 4 mm ;
- des poudrettes de pneus, ayant avantageusement une taille inférieure à 0,8 mm ; ou
- leurs mélanges.

Les granulats millimétriques sont de préférence quasi exempts de parties métalliques (^{~}90% du métal a été éliminé).

Lors de l'étape a) du procédé selon l'invention, une source de potassium est ajoutée. La quantité de potassium apportée par la source de potassium varie de 0.5 à 100% en masse, par rapport à la masse de pneus ou morceaux de pneus. De préférence, la quantité de potassium est comprise de 1 à 10% en masse, par rapport à la masse de pneus ou morceaux de pneus, encore plus préférentiellement de 2 à 5%.

Le potassium peut être ajouté sous toutes ses formes, liquide, solide, ou vaporisée.

L'étape a) du procédé selon l'invention peut comprendre l'ajout supplémentaire d'une source organique de potassium, d'aluminium, ou de métal alcalin ou alcalino-terreux choisi préférentiellement parmi le sodium, ou leurs mélanges.

L'étape a) du procédé selon l'invention peut comprendre l'ajout d'une source de potassium choisie parmi une source organique de potassium ou une source minérale de potassium.

Par source organique de potassium, on entend par exemple de la matière végétale brute, de la matière végétale séchée, la matière végétale mouillée (des algues par exemple), des résidus de matières végétales, qui peuvent se présenter sous forme de déchets, de cendres, de compost ou leurs mélanges.

La matière végétale peut être de la luzerne, le fruit du palmier à huile, des algues ou tout autre matière végétale, de préférence riche en potassium ou enrichie en potassium.

Par source minérale de potassium, on entend en particulier le carbonate de potassium, l'hydroxyde de potassium ou leurs mélanges. Dans le cas préférentiel du carbonate de potassium, de préférence, la quantité de carbonate de potassium est comprise de 1 à 180 %, pourcentage en masse par rapport à la masse de pneus ou morceaux de pneus. De préférence, la quantité de potassium est comprise de 2 à 18%, plus préférentiellement de 3,5 à 9%, pourcentage en masse par rapport à la masse de pneus ou morceaux de pneus.

On entend également des résidus de matières minérales inorganiques tels que des boues, des minerais ou des cendres issus de l'industrie sidérurgique ou celle du charbon.

L'étape b) du procédé selon l'invention est réalisée à une température comprise de 800 à 1200°C. Lorsqu'un lit fluidisé est mis en œuvre à l'étape a), la température est de préférence comprise de 800 à 1000°C, plus préférentiellement de 850 à 950°C. Lorsqu'un lit fixe est mis en œuvre à l'étape a), la température est de préférence comprise de 800 à 1200°C, plus préférentiellement de 850 à 1150°C.

L'étape b) du procédé selon l'invention est réalisée en présence de vapeur d'eau.

Selon une variante, la vapeur d'eau peut être injectée. Dans ce cas le procédé selon l'invention comprend l'injection de vapeur d'eau au cours de l'étape b). Selon une autre variante, la vapeur d'eau est apportée par la source de potassium, par exemple par la matière végétale. Dans ce cas la vapeur d'eau est générée in situ dans le réacteur.

Avantageusement, la vapeur d'eau permet une gazéification plus réactive et plus rapide. De plus la vapeur d'eau est plus simple à mettre en place.

Le gaz de gazéification est avantageusement choisi parmi l'air, l'oxygène, le dioxyde de carbone ou une combinaison de ces gaz.

De préférence, l'étape b) du procédé selon l'invention comprend une combinaison vapeur d'eau/oxygène ou une combinaison vapeur d'eau/air/oxygène.

De préférence, l'étape b) du procédé selon l'invention comprend l'injection d'une combinaison d'air et de vapeur d'eau.

Une autre combinaison préférée est l'injection de vapeur d'eau et d'oxygène.

Lors de l'étape b), lorsqu'il y a injection de vapeur d'eau, le taux d'injection varie avantageusement de 0.5 à 5 g de vapeur d'eau / g de pneus ou morceaux de pneus, plus avantageusement de 1 à 3 g de vapeur d'eau / g de pneus ou morceaux de pneus, encore plus avantageusement de 1.4 à 2 g de vapeur d'eau / g de pneus ou morceaux de pneus.

En particulier, lors de l'étape b) le taux d'injection du gaz de gazéification varie avantageusement de 0,5 à 10 g de gaz / g de pneus ou morceaux de pneus, plus avantageusement de 1 à 5 g de gaz / g de pneus ou morceaux de pneus, encore plus avantageusement de 1,4 à 3,5 g de gaz / g de pneus ou morceaux de pneus.

A l'étape b) du procédé selon l'invention, le gaz de gazéification est injecté à une vitesse allant de 0.1 m.s⁻¹ à 5 m.s⁻¹, de préférence de 0.5 m.s⁻¹ à 5 m.s⁻¹, encore plus préférentiellement de 1 m.s⁻¹ à 5 m.s⁻¹.

L'étape b) du procédé selon l'invention est rapide, et sa durée est courte. Avantageusement, il est possible d'obtenir une conversion complète du carbone en au moins 10 minutes, de préférence au moins 12 minutes, plus préférentiellement au moins 15 minutes, encore plus préférentiellement en 10 à 30 minutes.

Lors de l'étape b), le taux de conversion du carbone en gaz de synthèse est avantageusement compris de 30 à 90%, de préférence de 35 à 88%, plus préférentiellement de 38 à 85%, pourcentage en masse.

Lorsqu'un lit fluidisé est mis en œuvre à l'étape a), le taux de conversion du carbone en gaz de synthèse à l'étape b) est avantageusement compris de 45 à 90%, de préférence de 50 à 88%, plus préférentiellement de 55 à 85%, pourcentage en masse.

Lorsqu'un lit fixe est mis en œuvre à l'étape a), le taux de conversion du carbone en gaz de synthèse à l'étape b) est avantageusement compris de 30 à 60%, de préférence de 35 à 55%, plus préférentiellement de 38 à 50%, pourcentage en masse.

Il est possible de prolonger la durée de l'étape b), notamment pour des raisons industrielles.

Il est entendu que dans une mise en œuvre du procédé en mode continu, la durée de l'étape b) doit s'entendre comme la durée de la conversion complète du carbone pour une masse donnée de charge d'alimentation.

Avantageusement le procédé selon l'invention ne comprend qu'une seule étape de gazéification.

Avantageusement le procédé selon l'invention ne comprend pas d'étape de pyrolyse, en particulier d'étape de pyrolyse des pneus ou morceaux de pneus.

Avantageusement le procédé selon l'invention ne comprend pas d'étape de transformation des pneus ou morceaux de pneus en charbon.

Avantageusement le procédé selon l'invention met en œuvre un seul réacteur, en particulier un seul lit fluidisé.

De préférence, à l'étape a) du procédé selon l'invention les pneus ou morceaux de pneus sont le seul combustible.
La figure 1 présente les vitesses de réactions mesurées par thermogravimétrie (ATG) pour des résidus de pneu et du bois de hêtre.
La figure 2 présente le degré de conversion du carbone contenu dans des pneus en gaz de synthèse en fonction du temps.

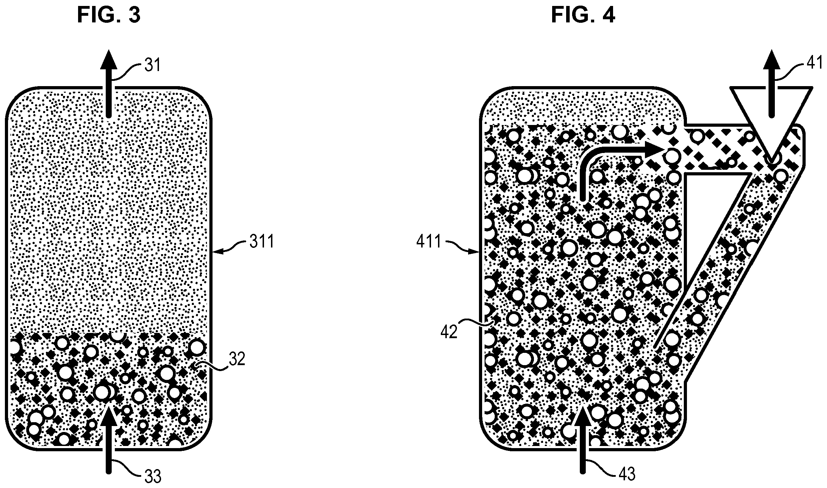

La figure 3 est une représentation schématique d'un exemple de lit fluidisé bouillonnant. Les résidus de pneus 32 sont mis en contact avec le gaz de gazéification 33 et éventuellement la vapeur d'eau 33 dans le réacteur 311 pour fabriquer un gaz de synthèse 31.
La figure 4 est une représentation schématique d'un exemple de lit fluidisé circulant simple. Les résidus de pneus 42 sont mis en contact avec le gaz de gazéification 43 et éventuellement la vapeur d'eau 43 dans le réacteur 411 pour fabriquer un gaz de synthèse 41.

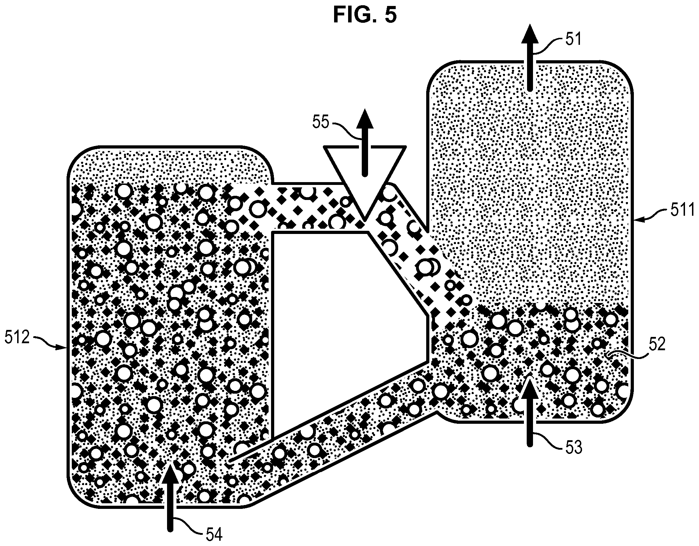

La figure 5 est une représentation schématique d'un exemple de lit fluidisé circulant double. Les résidus de pneus 52 sont mis en contact avec le gaz de gazéification 53 et éventuellement la vapeur d'eau 53 dans le réacteur 511 pour fabriquer un gaz de synthèse 51. Le gaz de gazéification 53 peut emmener le lit vers la chambre de combustion 512 où de l'air et /ou de l'oxygène sont introduits 54, les gaz de combustion 55 étant évacués plus haut.

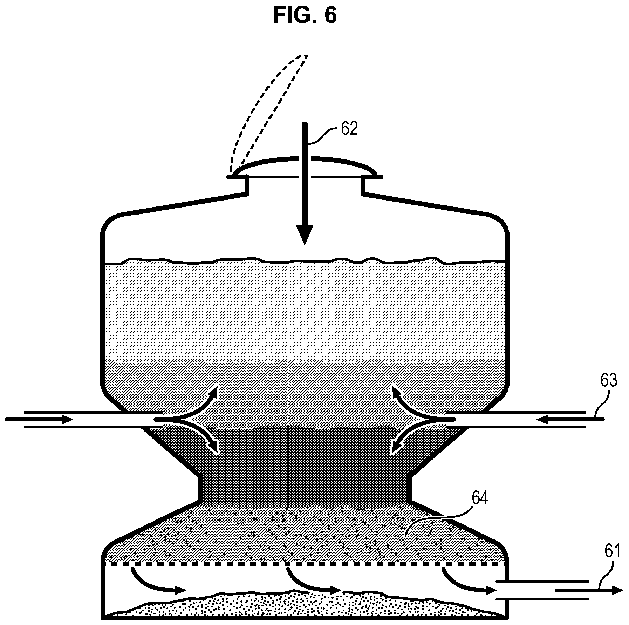

La figure 6 est une représentation schématique d'un exemple de lit fixe à co courant. Les résidus de pneus 62 sont mis en contact avec le gaz de gazéification 63 et éventuellement la vapeur d'eau 63 dans le réacteur pour fabriquer un gaz de synthèse 61. La zone de réduction est 64.

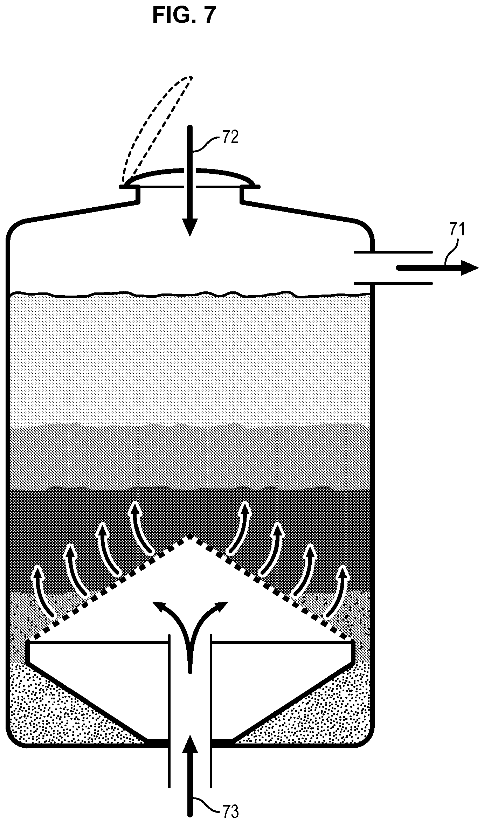

La figure 7 est une représentation schématique d'un exemple de lit fixe à contre-courant. Les résidus de pneus 72 sont mis en contact avec le gaz de gazéification 73 et éventuellement la vapeur d'eau 73 dans le réacteur pour fabriquer un gaz de synthèse 71.
La figure 8 est un schéma du dispositif expérimental utilisé pour les analyses thermogravimétrique décrite dans les exemples. Un gaz de vecteur 81 est introduit dans le générateur de vapeur 82. Un gaz de protection 84 est introduit dans le réacteur 83. Un gaz de tête 86 est introduit dans la balance électronique 85. Le dispositif est muni d'une sortie des gaz 87. De l'eau du réseau 89 est introduite dans un cryo-générateur 88.

Les exemples suivants sont donnés à titre informatif et n'ont aucun caractère limitant.

### EXEMPLES

### Préparations des morceaux de pneus :

Les morceaux de pneus ont été préparés selon un procédé à chaud utilisant un broyeur et un procédé de la société KAHL. Après triage des pneus, ceux-ci ont été déchiquetés lors d'un broyage primaire afin d'obtenir des morceaux dont la taille était de l'ordre de 50 à 200 mm, contenant encore la quasi-totalité de leurs renforts. Le broyage a été effectué à un débit de 10 tonnes/heure. Puis ces « déchiquetas » ont été dirigés vers les étapes de broyage et granulation. Ces morceaux ont été broyés lors d'un broyage secondaire à l'aide d'une presse à filière plate de la société KAHL pour obtenir des granulats de taille 0,8 à 4 mm. Le broyage a été réalisé par plusieurs broyeurs placés en série, séparés par des tables vibrantes perforées à différents diamètres. Les fibres textiles, plus légères, ont été évacuées par un flux d'air ascendant.

La taille des broyats, granulats et poudrettes a été mesurées par tamisage plus ou moins fin.

### Analyse thermogravimétrique :

L'analyse thermogravimétrique (ATG) ou thermogravimétrie a pour objectif la caractérisation des matériaux par mesure directe de leur masse en fonction de la température et/ou du temps.

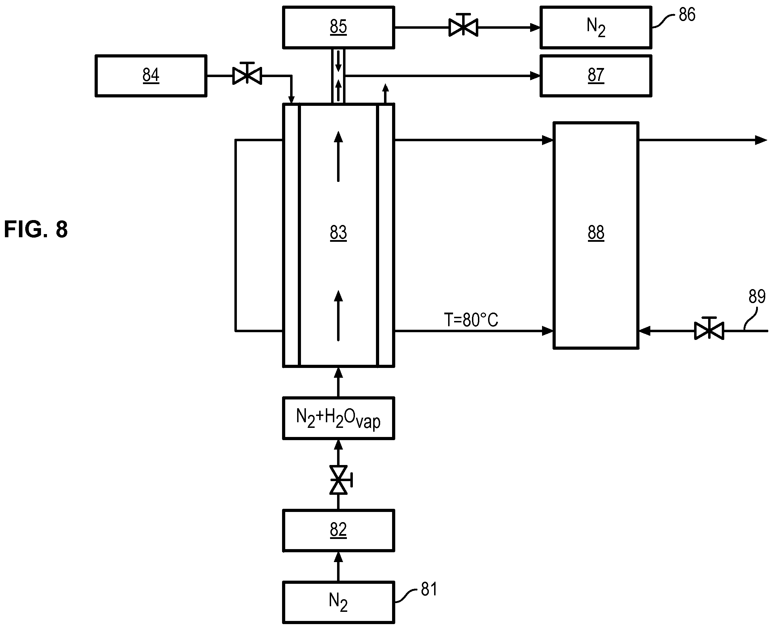

Tous les essais de gazéification ont été menés dans une thermobalance « Setsys » de SETARAM, couplée à un générateur de gaz humide « Wetsys ». Un schéma du dispositif expérimental est donné dans la Figure 8. Dans tous les essais, l'échantillon placé dans sa nacelle dans le four est chauffé sous balayage de gaz neutre jusqu'à la température souhaitée, à une vitesse modérée (25°C/min). La gazéification est ensuite réalisée par balayage de gaz humide à une température fixée. Tous les essais présentés ont été réalisés avec un mélange d'azote (80 %vol) et de vapeur d'eau (20%vol). La masse de l'échantillon est mesurée en continu.

Les morceaux de pneus obtenus ci-dessus ont été analysés par ATG. Il s'agissait de granulats de taille 0,8 à 4 mm.

Les résultats sont présentés à la figure 1 qui montre les vitesses de réactions mesurées par thermogravimétrie (ATG) pour des résidus de pneu et du bois de hêtre. La vitesse de réaction des pneus est très lente aux températures comprise entre 800°C et 1000°C, c'est-à-dire aux températures de fonctionnement des lits fluidisés (et des lits fixes), comparée au bois de hêtre. La conversion du carbone était inférieure à 50%. Ces résultats montrent que même à 950°C, la gazéification, en particulier la gazéification sous vapeur d'eau, des pneus usagés n'est pas complète.

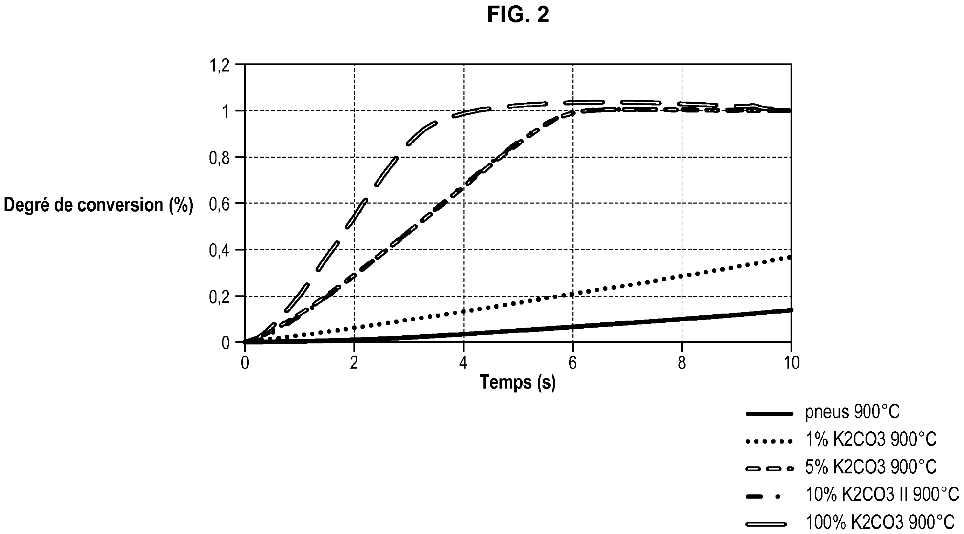

Puis différentes quantités de carbonate de potassium ont été ajoutées 1, 5, 10 et 100% de carbonate de potassium par rapport à la masse de morceaux de pneus. Les résultats sont présentés à la figure 2 qui montre les résultats en ATG de la gazéification de pneus avec ajout de K2CO3. A partir de 5% en masse de K2CO3, les temps de gazéification deviennent suffisamment courts pour être compatibles avec un procédé industriel :
- Sans K2CO3, le temps de la gazéification totale est d'environ 3h,
- Avec 1% en masse de K2CO3, on réduit ce temps à environ 1h,
- A partir de 5% en masse, ce temps devient inférieur à 10 min.

### Procédé de fabrication d'un gaz de synthèse en lit fluidisé :

Un Lit Fluidisé à Haute Température (LFHT) expérimental a été utilisé qui permet de gazéifier les pneus ou morceaux de pneus avec un débit d'alimentation de quelques dixièmes de kg.h-1 à quelques kg.h-1 en présence de gaz oxydant à une température maximale de 1000°C et sous une pression maximale de 15 bars. Le réacteur est équipé de 11 zones de chauffe indépendante, dont 2 sont situées à l'extrémité de la vis d'alimentation du solide à gazéifier. En amont du réacteur, une chaudière permet de produire de la vapeur d'eau surchauffée qui est injectée en partie basse du réacteur, éventuellement mélangée avec un gaz sec (CO2 ou air pour les essais « autothermiques » dans lesquels une partie de la matière carbonée est brûlée pour atteindre la température de gazéification).

Les pneus ou morceaux de pneus, stockés dans une trémie, est apportée via un système d'alimentation par vis sans fin. Le débit est régulé par la vitesse de rotation de la vis de dosage. De l'argon est injecté avec un débit constant pendant les essais pour éviter une remontée du gaz de synthèse vers la trémie.

Dans la zone réactionnelle, un matériau de fluidisation à travers lequel circule le mélange de gaz de gazéification préchauffé devient, au-delà d'un certain débit, un lit fluidisé bouillonnant où la ressource carbonée subit une gazéification. Grâce à la température supérieure à 800°C, la charge carbonée se transforme en gaz permanents majoritaires (H2, CO, CO2, CH4, H2O), et en espèces gazeuses minoritaires : goudrons (≥C6), hydrocarbures en C2-C3 et espèces gazeuses inorganiques.

Les éléments inorganiques présents dans le matériau initial restent sous forme solide dans le réacteur sous forme de cendres, ou sont relâchés sous forme gazeuse.

Dans la partie haute du gazéifieur des chandelles en poral métallique filtrent à chaud les particules du gaz de synthèse avant qu'il soit évacué du gazéifieur.

En sortie, le réacteur est équipé de 3 lignes d'évacuation des gaz :
- Une ligne principale par laquelle le gaz de synthèse circule classiquement lors des essais de gazéification avec dans une première partie 3 trois pièges en série refroidis à 15, 0 et -10°C environ pour capter l'eau, les inorganiques condensables et une partie des goudrons lourds. Avant d'être envoyés vers l'extérieur, les gaz secs sont analysés par un micro-chromatographe. Les espèces quantifiables sont : N2, Ar, H2, CO, CO2, CH4, C2H2, C2H4, C2H6, C3H8, C6H6, C7H8, xylènes, H2S, COS et H2O résiduelle.
- Une ligne dérivée en cas de bouchage de la ligne principale, par laquelle le gaz de synthèse peut circuler en passant par un piège froid avant de rejoindre la ligne principale avant le débitmètre massique Coriolis.

Une ligne de prélèvement permet de faire barboter une partie du gaz de synthèse dans des solvants, afin d'y piéger soit les goudrons dans de l'isopropanol soit des inorganiques (HCN, NH3) dans de l'eau ou une solution acide ou basique.

Le lit fluidisé expérimental décrit ci-dessus a été utilisé. Le réacteur a été préchauffé a 800°C. Puis le réacteur du lit fluidisé a été chargé avec plusieurs kg de morceaux de pneus de taille inférieure à 4 mm. L'étape b) du procédé selon l'invention s'est déroulée à 900°C et 10 bars. Le gaz de gazéification était de l'air associée à de la vapeur d'eau. Une source de potassium a été introduite sous forme de carbonate de potassium. Le pourcentage de conversion du carbone (C du pneu vers CO et CO2) était de l'ordre de 80%.

## Revendications

1. Procédé de fabrication d'un gaz de synthèse comprenant les étapes suivantes :
a) charger un réacteur à lit fluidisé ou à lit fixe avec une source de potassium et des pneus ou des morceaux de pneus, la quantité de potassium apportée par la source de potassium variant de 0.5 à 100 % en masse par rapport à la masse de pneus ou de morceaux de pneus ;
b) injecter dans le réacteur de l'étape a), un gaz de gazéification à une vitesse allant de 0.1 m.s⁻¹ à 5 m.s⁻¹, la température au sein dudit réacteur étant comprise de 800 à 1200°C, l'étape b) étant réalisée en présence de vapeur d'eau ;
c) récupérer le gaz de synthèse.

2. Procédé selon la revendication 1, **caractérisé en ce que** les morceaux de pneus sont choisis parmi :
- des broyats centimétriques de pneus, ayant avantageusement une taille allant de 4 mm à 20 mm ;
- des granulats de pneus, ayant avantageusement une taille allant de 0,8 mm à 4mm;
- des poudrettes de pneus, ayant avantageusement une taille inférieure à 0,8 mm ; ou
- leurs mélanges.

3. Procédé selon l'une quelconque des revendications précédentes, **caractérisé en ce que** la quantité de potassium apportée par la source de potassium est de 1 à 10% en masse, de préférence de 2 à 5 % en masse, par rapport à la masse de pneus ou morceaux de pneus.

4. Procédé selon l'une quelconque des revendications précédentes, **caractérisé en ce que** la source de potassium est choisie parmi une source organique de potassium ou une source minérale de potassium.

5. Procédé selon la revendication précédente, **caractérisé en ce que** la source de potassium est une source minérale de potassium choisie parmi le carbonate de potassium, l'hydroxyde de potassium ou leurs mélanges.

6. Procédé selon la revendication précédente, **caractérisé en ce que** la quantité de carbonate de potassium est comprise de 1 à 180 %, de préférence de 2 à 18%, plus préférentiellement de 3,5 à 9%, pourcentage en masse par rapport à la masse de pneus ou morceaux de pneus.

7. Procédé selon l'une quelconque des revendications précédentes, **caractérisé en ce que** le gaz de gazéification est choisi parmi l'air, l'oxygène, le dioxyde de carbone ou une combinaison de ces gaz.

8. Procédé selon l'une quelconque des revendications précédentes, **caractérisé en ce que** lors de l'étape b) le taux d'injection du gaz de gazéification varie de 0,5 à 10 g de gaz / g de pneus ou morceaux de pneus.

9. Procédé selon l'une quelconque des revendications précédentes, **caractérisé en ce que** l'étape a) comprend l'ajout supplémentaire d'une source organique de potassium, d'aluminium, ou de métal alcalin ou alcalino-terreux choisi préférentiellement parmi le sodium, ou leurs mélanges.

10. Procédé selon l'une quelconque des revendications précédentes, **caractérisé en ce que** qu'il ne comprend pas d'étape de pyrolyse.

11. Procédé selon l'une quelconque des revendications précédentes, **caractérisé en ce que** le lit fluidisé est un lit fluidisé bouillonnant.

12. Procédé selon l'une quelconque des revendications précédentes, **caractérisé en ce que** la conversion complète du carbone a lieu en 10 à 30 minutes.

13. Procédé selon l'une quelconque des revendications précédentes, **caractérisé en ce que** à l'étape a), les pneus ou morceaux de pneus sont le seul combustible.

## Patentansprüche

1. Verfahren zur Herstellung eines Synthesegases, umfassend die folgenden Schritte:
a) Beschicken eines Wirbelschicht- oder Festbettreaktors mit einer Kaliumquelle und Reifen oder Reifenstücken, wobei die von der Kaliumquelle gelieferte Kaliummenge von 0,5 bis 100% Massenanteil, bezogen auf die Masse der Reifen oder Reifenstücke, variiert;
b) Eindüsen eines Vergasungsgases in den Reaktor von Schritt a) mit einer Geschwindigkeit im Bereich von 0,1 m.s⁻¹ bis 5 m.s⁻¹, wobei die Temperatur innerhalb des Reaktors zwischen 800 und 1200°C liegt, wobei Schritt b) in Gegenwart von Wasserdampf durchgeführt wird;
c) Gewinnen des Synthesegases.

2. Verfahren nach Anspruch 1, **dadurch gekennzeichnet, dass** die Reifenstücke ausgewählt werden aus:
- zentimetergroße Reifenfetzen, vorteilhafterweise mit einer Größe im Bereich von 4 mm bis 20 mm;
- Reifengranulat, vorteilhafterweise mit einer Größe im Bereich von 0,8 mm bis 4 mm;
- Reifenpulver, vorteilhafterweise mit einer Größe von weniger als 0,8 mm; oder
- deren Mischungen.

3. Verfahren nach einem der vorstehenden Ansprüche, **dadurch gekennzeichnet, dass** die von der Kaliumquelle zugeführte Kaliummenge 1 bis 10% Massenanteil, vorzugsweise 2 bis 5% Massenanteil, bezogen auf die Masse der Reifen oder Reifenstücke, beträgt.

4. Verfahren nach einem der vorstehenden Ansprüche, **dadurch gekennzeichnet, dass** die Kaliumquelle ausgewählt wird aus einer organischen Kaliumquelle oder einer anorganischen Kaliumquelle.

5. Verfahren nach dem vorstehenden Anspruch, **dadurch gekennzeichnet, dass** die Kaliumquelle eine anorganische Kaliumquelle ist, ausgewählt aus Kaliumcarbonat, Kaliumhydroxid oder deren Mischungen.

6. Verfahren nach dem vorstehenden Anspruch, **dadurch gekennzeichnet, dass** die Menge an Kaliumcarbonat 1 bis 180% Massenanteil, vorzugsweise 2 bis 18% Massenanteil, noch bevorzugter 3,5 bis 9% Massenanteil, bezogen auf die Masse der Reifen oder Reifenstücke, beträgt.

7. Verfahren nach einem der vorstehenden Ansprüche, **dadurch gekennzeichnet, dass** das Vergasungsgas ausgewählt wird aus Luft, Sauerstoff, Kohlendioxid oder einer Kombination dieser Gase.

8. Verfahren nach einem der vorstehenden Ansprüche, **dadurch gekennzeichnet, dass** während Schritt b) die Eindüsungsrate des Vergasungsgases von 0,5 bis 10 g Gas/g Reifen oder Reifenstücke variiert.

9. Verfahren nach einem der vorstehenden Ansprüche, **dadurch gekennzeichnet, dass** Schritt a) die zusätzliche Zugabe einer organischen Quelle von Kalium, Aluminium oder Alkali- oder Erdalkalimetall, vorzugsweise ausgewählt aus Natrium oder deren Mischungen, umfasst.

10. Verfahren nach einem der vorstehenden Ansprüche, **dadurch gekennzeichnet, dass** es keinen Schritt der Pyrolyse umfasst.

11. Verfahren nach einem der vorstehenden Ansprüche, **dadurch gekennzeichnet, dass** das Wirbelbett ein sprudelndes Wirbelbett ist.

12. Verfahren nach einem der vorstehenden Ansprüche, **dadurch gekennzeichnet, dass** die vollständige Umwandlung des Kohlenstoffs in 10 bis 30 Minuten erfolgt.

13. Verfahren nach einem der vorstehenden Ansprüche, **dadurch gekennzeichnet, dass** in Schritt a) die Reifen oder Reifenstücke der einzige Brennstoff sind.

## Claims

1. A process for manufacturing a synthesis gas comprising the following steps:
a) loading a fluidized-bed or fixed-bed reactor with a source of potassium and tires or tire pieces, the amount of potassium supplied by the source of potassium varying from 0.5 to 100% by mass based on the mass of tires or tire pieces;
b) injecting, into the reactor of step a), a gasification gas at a speed ranging from 0.1 m.s⁻¹ to 5 m.s⁻¹, the temperature within said reactor being comprised between 800 and 1200°C, step b) being carried out in the presence of steam;
c) recovering the synthesis gas.

2. The process as claimed in claim 1, **characterized in that** the tire pieces are selected from:
- centimetric ground tire material, advantageously having a size ranging from 4 mm to 20 mm;
- tire granules, advantageously having a size ranging from 0.8 mm to 4 mm;
- tire powders, advantageously having a size smaller than 0.8 mm; or
- mixtures thereof.

3. The process as claimed in any one of the preceding claims, **characterized in that** the amount of potassium provided by the source of potassium is 1 to 10% by mass, preferably from 2 to 5% by mass, based on the mass of tires or tire pieces.

4. The process as claimed in any one of the preceding claims, **characterized in that** the source of potassium is selected from an organic source of potassium or an inorganic source of potassium.

5. The process as claimed in the preceding claim, **characterized in that** the source of potassium is an inorganic source of potassium selected from potassium carbonate, potassium hydroxide or mixtures thereof.

6. The process as claimed in the preceding claim, **characterized in that** the amount of potassium carbonate is comprised from 1 to 180%, preferably from 2 to 18%, more preferentially from 3.5 to 9%, percentage by mass based on the mass of tires or tire pieces.

7. The process as claimed in any one of the preceding claims, **characterized in that** the gasification gas is selected from air, oxygen, carbon dioxide or a combination of such gases.

8. The process as claimed in any one of the preceding claims, **characterized in that** during step b) the injection rate of the gasification gas varies from 0.5 to 10 g of gas/g of tires or tire pieces.

9. The process as claimed in any one of the preceding claims, **characterized in that** step a) comprises the further addition of an organic source of potassium, of aluminum, or of an alkali or alkaline-earth metal preferentially selected from sodium, or mixtures thereof.

10. The process as claimed in any one of the preceding claims, **characterized in that** it does not comprise a pyrolysis step.

11. The process as claimed in any one of the preceding claims, **characterized in that** the fluidized bed is a bubbling fluidized bed.

12. The process as claimed in any one of the preceding claims, **characterized in that** the complete conversion of carbon takes place within 10 to 30 minutes.

13. The process as claimed in any one of the preceding claims, **characterized in that** in step a), the tires or tire pieces are the sole fuel.
